(19) Europäisches Patentamt
European Patent Office
Office européen des brevets

(11) Veröffentlichungsnummer: **0 025 555**
**B1**

(12) # EUROPÄISCHE PATENTSCHRIFT

(45) Veröffentlichungstag der Patentschrift: **23.03.83**

(21) Anmeldenummer: **80105246.5**

(22) Anmeldetag: **03.09.80**

(51) Int. Cl.³: **C 09 D 5/40,** C 09 D 3/58, C 09 D 3/72, C 08 G 59/00, C 08 G 18/00, C 25 D 13/06

(54) **Selbstvernetzendes, hitzehärtbares wässriges Lacküberzugsmittel und dessen Verwendung zur kathodischen Abscheidung auf elektrisch leitenden Oberflächen.**

(30) Priorität: **08.09.79 DE 2936411**

(43) Veröffentlichungstag der Anmeldung: **25.03.81 Patentblatt 81/12**

(45) Bekanntmachung des Hinweises auf die Patenterteilung: **23.03.83 Patentblatt 83/12**

(84) Benannte Vertragsstaaten: **BE DE FR GB IT NL SE**

(56) Entgegenhaltungen:
**FR-A-2 158 033**
**FR-A-2 381 115**

(73) Patentinhaber: **Herberts Gesellschaft mit beschränkter Haftung, Christbusch 25, D-5600 Wuppertal 2 (DE)**

(72) Erfinder: **Patzschke, Hans-Peter, Dr., Am Heckendorn 71, D-5600 Wuppertal 2 (DE)**
Erfinder: **Göbel, Armin, Osterroder Strasse 27, D-5600 Wuppertal 2 (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

EP 0 025 555 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Selbstvernetzendes, hitzehärtbares wäßriges Lacküberzugsmittel und dessen Verwendung zur kathodischen Abscheidung auf elektrisch leitenden Oberflächen

Gegenstand der Erfindung ist ein selbstvernetzendes, hitzehärtbares wäßriges Lacküberzugsmittel und dessen Verwendung zur kathodischen Abscheidung auf elektrisch leitenden Oberflächen.

In der europäischen Patentanmeldung 79 100 735.4 (Publikations-Nr. 4090) werden kathodisch abscheidbare Elektrotauchlack-Bindemittel beschrieben, die beim Einbrennen unter Abspalten von Alkoholen Amide bilden. Das in dieser Patentanmeldung beschriebene Überzugsmittel enthält als Bindemittel ein oder mehrere aminogruppenhaltige Harze (Komponente A), die primäre und/oder sekundäre und gegebenenfalls auch tertiäre Aminogruppen enthalten, sowie umamidierungsfähige Vernetzungsmittel (Komponente B). Es hat sich gezeigt, daß bei längerem Stehen des Elektrotauchlack-Bades, das diese Bindemittel enthält, unter gewissen Umständen Fällungserscheinungen bzw. Phasentrennungen auftreten können. Dieser nachteilige Effekt kann dadurch verringert oder auch oft verhindert werden, wenn das Vernetzungsmittel (Komponente B) ebenfalls Aminogruppen im Molekül enthält, wie in der genannten Patentanmeldung bereits beschrieben wurde.

Aus der DE-A-2 252 526 bzw. DE-A-2 265 195 sind Verfahren zum elektrischen Beschichten an der Kathode bekannt, deren wäßrige, neutralisierte Lösungen ein selbsthärtendes organisches Kunstharz enthalten, das neben Amino- und Hydroxylgruppen noch verkappte Isocyanatgruppen enthält, die bei Raumtemperatur beständig und mit Hydroxylgruppen bei erhöhten Temperaturen unter Bildung von Urethanbindungen reaktionsfähig sind. Der Nachteil dieses Verfahrens liegt im Verunreinigen der Abluft durch hohe Mengen (10 bis 20 Gew.-%) an abgespaltenen Schutzgruppen, wie Alkoholen, Aminoalkoholen und Phenolen.

Der vorliegenden Erfindung liegt die Aufgabenstellung zugrunde, ein wäßriges selbstvernetzendes Elektrotauchlack-Überzugsmittel zu schaffen, das die genannten Nachteile verbessert. Ihr liegt außerdem die Aufgabenstellung zugrunde, ein Lacküberzugsmittel zu finden, das nach üblichen Lackauftragsverfahren aufgebracht werden kann, Lacküberzüge mit gutem Korrosionsschutz ergibt und möglichst wenig organische Lösungsmittel und Spaltprodukte beim Einbrennen an die Umgebung abgibt.

Die genannten Nachteile werden erfindungsgemäß durch selbstvernetzende Bindemittel verringert, die als funktionelle Gruppen im Harzmolekül primäre und/oder sekundäre Aminogruppen neben umamidierungsfähigen Estergruppen enthalten.

Gegenstand der Erfindung ist demgemäß ein selbstvernetzendes, hitzehärtbares wäßriges Lacküberzugsmittel, enthaltend durch Protonisieren mit Säuren wasserverdünnbares Bindemittel, Pigmente, Füllstoffe, Korrosionsschutzinhibitoren, Lackhilfsmittel, gegebenenfalls Katalysatoren und in einer Menge von bis zu 20 Gew.-%, bezogen auf das Gesamtgewicht des Überzugsmittels, organische Lösungsmittel, das dadurch gekennzeichnet ist, daß es als Bindemittel enthält ein primäre und/oder sekundäre und gegebenenfalls auch tertiäre Aminogruppen sowie endständige veresterte Carboxylgruppen enthaltendes Kunstharz mit einem mittleren Molekulargewicht ($\overline{Mn}$) von 500 bis 15 000, das eine Aminzahl von 20 bis 180 und eine Esterzahl von 20 bis 350 aufweist, wobei die Estergruppen in neutralem wäßrigem Medium weitgehend stabil sind, jedoch in basischem Medium bei Temperaturen über etwa 140°C gegenüber primären und/oder sekundären Aminogruppen des Kunstharzes reaktionsfähig sind. Unter endständigen Carboxylgruppen werden solche verstanden, die am Kettenende oder am Ende von Seitenketten verzweigter Moleküle vorliegen.

Gegenstand der Erfindung ist weiterhin bevorzugt die Verwendung dieses Überzugsmittels zur kathodischen Abscheidung aus einem Lackbad auf elektrisch leitende Oberflächen.

Das Bindemittel gemäß der Erfindung ist bevorzugt ein Reaktionsprodukt von epoxidgruppenhaltigen und/oder isocyanatgruppenhaltigen Verbindungen mit hydroxy- oder aminogruppenhaltigen Aldiminen oder Ketiminen und mit Hydroxy- und/oder Aminoalkylestern oder sauren Polycarbonsäureestern und gegebenenfalls Polyestern. Es hängt von der Art der eingesetzten Ausgangsprodukte und den jeweiligen reaktiven Gruppen ab, ob Gemische der Ausgangsprodukte eingesetzt werden können bzw. in welcher Reihenfolge die Umsetzungen erfolgen. Dies wird nachfolgend noch im einzelnen unter Bezugnahme auf beispielhafte Nennungen von Ausgangsprodukten erläutert. Es ist auch möglich, zunächst aus einzelnen Ausgangsprodukten Zwischenprodukte herzustellen und diese dann mit den anderen Ausgangsprodukten oder mit Zwischenprodukten, die aus anderen Ausgangsprodukten erhalten wurden, zu den Bindemittelmolekülen zu verknüpfen.

Zweckmäßig sind mindestens 80, vorzugsweise mindestens 90, insbesondere mindestens 95 Äquivalent-% der endständigen Carboxylgruppen verestert. Es ist besonders vorteilhaft, wenn im wesentlichen alle endständigen Carboxylgruppen verestert sind.

Die Reaktivität ist so abzustimmen, daß die Harze in neutraler, wäßriger Lösung stabil sind und nach dem Beschichten im basischen Medium bei erhöhten Temperaturen vernetzen. Es werden dabei Spaltprodukte in Mengen unter etwa 10 Gew.-%, bevorzugt unter 8 Gew.-%, besonders bevorzugt unter 6 Gew.-% gebildet. Die Harzlösungen zeigen keine Fällungserscheinungen mehr und können trotz Senkung des Neutralisationsgrades mit einem höheren pH-Wert stabil gefahren werden.

Das erfindungsgemäße Harz entsteht wegen der schonenden Reaktionsbedingungen und damit verbunden der geringen Vergilbung im einfachsten Fall durch direkte Addition von Hydroxi- und/oder

Aminocarbonsäureestern und/oder sauren Polycarbonsäureestern und von aminogruppen- bzw. hydroxylgruppenhaltigen Ketiminen und/oder Aldiminen an Harzmoleküle mit Isocyanat- oder Epoxidgruppen. Die Reihenfolge der einzelnen Umsetzungsschritte zur Einführung der reaktiven Gruppen wird von den praktisch möglichen Syntheseschritten abgeleitet. Für die Erfindung ist nur das gleichzeitige Nebeneinander von reaktiven Aminogruppen und umamidierungsfähigen Estergruppen in einem Harz wesentlich.

Für die Wasserlöslichkeit ist eine Aminzahl von mindestens etwa 20, bevorzugt mindestens etwa 30, besonders bevorzugt mindestens etwa 50 notwendig. Sie liegt höchstens bei etwa 180, besonders höchstens etwa 150, bevorzugt höchstens etwa 120. Sie kann auch durch Mischen zweier geeigneter Harze mit hoher und niedriger Aminzahl entstehen. Der Anteil an primären und sekundären Aminogruppen soll mindestens bei 1/3 der Gesamtaminzahl liegen, d. h., diese Teilaminmenge sollte über 30, bevorzugt über 50 liegen. Es wird angestrebt, den Anteil an im Molekül vorhandenen sekundären bzw. besonders vorteilhaft primären Aminogruppen möglichst hoch zu halten. Die für die Herstellung der Harze verwendeten Amine haben einen $pK_b$-Wert von 2,5 bis 9,0, bevorzugt 2,8 bis 7,0, besonders bevorzugt 3,0 bis 5,5.

Die erfindungsgemäßen Harze werden so aufgebaut, daß auf jede primäre oder sekundäre Aminogruppe mindestens etwa 0,1, bevorzugt mindestens etwa 0,5 und höchstens etwa 5, bevorzugt höchstens etwa 1,2 Val Estergruppen im Molekül vorliegen. Es wird ein stöchiometrisches Äquivalenzverhältnis angestrebt. Anders ausgedrückt beträgt das Äquivalenzverhältnis zwischen primären und/oder sekundären Aminogruppen zu veresterten Carboxylgruppen mindestens 1 : 5, vorzugsweise 1 : 1,2, besonders bevorzugt etwa 1 : 1. Es liegt zweckmäßig bei höchstens 1 : 0,1, bevorzugt 1 : 0,5. Die Anzahl der umamidierbaren Estergruppen entspricht bevorzugt einer Esterzahl von mindestens etwa 20, besonders mindestens etwa 40, besonders vorteilhaft mindestens etwa 60. Die obere Grenze liegt zweckmäßig bei etwa 350, bevorzugt 250, vorteilhaft 150. Das mittlere Molekulargewicht ($\overline{Mn}$) der selbstvernetzenden Harze beträgt mindestens 500, vorzugsweise mindestens etwa 800 und höchstens 15 000, vorzugsweise höchstens etwa 10 000. Die Viskosität, gemessen bei 25° C, liegt etwa zwischen 0,5 und 10 Pa s, bevorzugt mindestens etwa 1 und höchstens etwa 5 Pa s nach Verdünnen mit Monobutylglykoläther auf eine Konzentration von 50 Gew.-%. Das mittlere Molekulargewicht bzw. die Viskosität kann auch durch Mischen zweier geeigneter Harze mit hohem und niedrigem Molekulargewicht bzw. hoher und niedriger Viskosität entstehen.

Als Harzgrundkörper werden z. B. aliphatische, cycloaliphatische und/oder aromatische Kohlenwasserstoffgerüste, die mehr als eine, bevorzugt mindestens zwei Epoxid- oder Isocyanatgruppen im Molekül enthalten, verwendet. Als besonders geeignet erweisen sich 1,2-epoxidgruppenhaltige Harze, die hergestellt werden durch

a) Einführen von Glycidylgruppen in alkalischem Medium über z. B. Epichlorhydrin
   aa) in OH-funktionelle Harze z. B. Epoxi-Novolake (=Polyglycidyläther)
   ab) in COOH-funktionelle Harze (=Polyglycidylester); oder
   ac) in $NH_2$-funktionelle Harze (=Polyglycidylamine)
b) Einpolymerisieren von Glycidyl(meth)acrylat in eine geeignete Monomerenmischung von z. B. Styrol und/oder (Meth)acrylsäureestern verschiedener Kettenlänge und/oder Hydroxialkyl(meth)-acrylaten.

Besonders bevorzugt gemäß a) ist, daß die 1,2-epoxidgruppenhaltigen Harze Polyglycidyläther der allgemeinen Formel

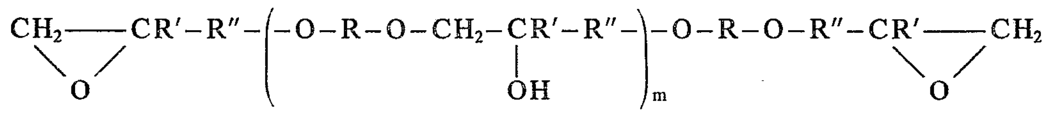

worin bedeuten

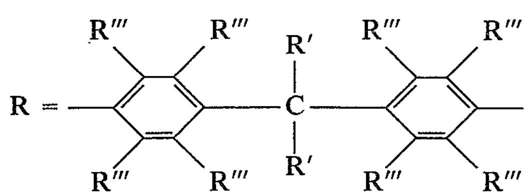

R' = Wasserstoff oder $-C_nH_{2n+1}$
R'' = $-(CR'_2)_n-$
R''' = R' oder Halogen, vorzugsweise Wasserstoff
m = 0 bis 8
n = 1 bis 3

mit einem mittleren Molekulargewicht ($\overline{Mn}$) von etwa 300 bis 2000 und einem Epoxiäquivalentgewicht von etwa 170 bis 1500 sind. Solche Harze sind z. B. Umsetzungsprodukte von Epichlorhydrin mit Dioxidiphenylmethan (Bisphenol F) oder Dioxidiphenylpropan (Bisphenol A). Diese Harze können auch in hydrierter Form eingesetzt werden. Um die Funktionalität zu verringern oder die Kette zu verlängern und damit das Molekulargewicht zu erhöhen, können die bevorzugten Polyglycidyläther mit Verbindungen umgesetzt werden, die reaktiven Wasserstoff enthalten. Solche Verbindungen haben z. B. Carboxylgruppen, Hydroxylgruppen oder primäre und sekundäre Aminogruppen. Bevorzugte Kettenabbruchmittel sind Dimethylolpropionsäure, Isopalmitinsäure, Versaticsäure, Diäthylamin, Di-(2-äthylhexyl)amin, Diäthanolamin und/oder lineare, verzweigte, gesättigte oder ungesättigte Monoalkohole verschiedener Kettenlänge. Bevorzugte Kettenverlängerungsmittel sind organische Polyalkohole wie Hexandiol-1,6 oder Dioxidiphenylpropan, insbesondere polymere Polyole wie Polyoxialkylenglykole oder Polyätherpolyole und/oder Diamine mit sekundären Aminogruppen wie das Reaktionsprodukt von Hexandiamin-1,6 mit zwei Mol Glycidyläther oder Glycidylester $\alpha$-verzweigter Fettsäuren.

Epoxidierte Polyglycidyläther können auch andere Grundkomponenten enthalten, wie Triglycidylisocyanurat, heterocyclische Diglycidylverbindungen (DE-A-1 816 095), substituierte Hydantoine (US-A-3 391 097), Dicyclopentadiendiepoxid oder 1-Epoxiäthyl-3,4-epoxicyclohexan.

Durch Copolymerisation von Glycidyl-(meth)acrylat mit anderen ungesättigten Monomeren werden epoxigruppenhaltige Harze mit einem mittleren Molekulargewicht ($\overline{Mn}$) von mindestens etwa 500, besonders mindestens etwa 800 und höchstens etwa 10 000, besonders höchstens etwa 6000 und einem Epoxiäquivalentgewicht von mindestens etwa 300, besonders mindestens etwa 800 und höchstens etwa 6000, besonders höchstens etwa 4000 hergestellt. Ungesättigte Monomere sind Styrol, Vinyltoluol, $\alpha$-Methylstyrol und/oder (Meth)-acrylsäureester verschiedener Kettenlänge, wobei die (Meth)-acrylsäureester bevorzugt lineare oder verzweigte aliphatische $C_1$- bis $C_4$-Alkohole und die Acrylsäureester bevorzugt lineare oder verzweigte aliphatische, cycloaliphatische oder aromatische $C_1$- bis $C_8$-Alkohole enthalten. Als zusätzliche Komponente können gegebenenfalls hydroxylgruppenhaltige Monomere wie Hydroxialkyl(meth)acrylsäureester, z. B. 2-Hydroxipropylmethacrylat, 1,4-Butandiolmonoacrylat oder Hydroxiäthylacrylat oder verätherte Methylolderivate des (Meth)-acrylamids verwendet werden. Die Mischpolymerisation erfolgt in organischen Lösungsmitteln wie Alkoholen oder Glykoläthern bei etwa 60 bis 145°C unter Zusatz von radikalischen Initiatoren wie Peroxiden, Hydroperoxiden, Perestern oder thermisch spaltbaren Azoverbindungen.

Isocyanatgruppenhaltige Polymere, die für den Aufbau des Grundharzes geeignet sind, bestehen aus aromatischen, aliphatischen und/oder cycloaliphatischen Grundgerüsten mit mindestens zwei Isocyanatgruppen pro Molekül. Typische Beispiele sind die Isomere oder Isomerengemische des Toluylendiisocyanats, 4,4'-Diphenylmethan-diisocyanats sowie ihre Hydrierungsprodukte wie Dicyclohexylmethan-diisocyanat. Außerdem finden Verwendung Hexan-1,6-diisocyanat, 1,6-Diisocyanato-2,2,4-trimethylhexan und 1-Isocyanatomethyl-3-isocyanato-1,5,5-trimethylcyclohexan. Besonders bevorzugt werden dabei höherfunktionelle Polyisocyanate, die durch Trimerisation, Umsetzung mit Wasser, Reaktion mit Polyalkoholen wie Trimethylolpropan, Triäthylisocyanurat oder aminogruppenhaltigen Polyolen entstehen. Derartige Produkte werden im Handel angeboten, z. B. Triphenylmethan-4,4',4''-triisocyanat (Desmodur R), das Biuret aus Hexamethylendiisocyanat und Wasser (Desmodur N) oder das Addukt aus Toluylendiisocyanat und Trimethylolpropan (Desmodur L).

Kettenabbruch oder Kettenverlängerung können auch hier – je nach Funktionalität – durch Umsetzung mit Verbindungen erfolgen, die reaktiven Wasserstoff enthalten, wobei Amid-, Urethan- oder Harnstoffverbindungen entstehen. Beispiele hierfür sind Dodecylalkohol, Dimethylaminoäthanol, Di-(2-äthylhexyl)amin, Hexandiol-1,6, N-Methyldiäthanolamin oder das Reaktionsprodukt von Hexamethylendiamin-1,6 mit 2 Mol Glycidyläther oder Glycidylester $\alpha$-verzweigter Fettsäuren.

Geeignete isocyanathaltige Präpolymere werden durch Reaktion von Polyglykoläthern, Polyesterpolyolen, Polyätherpolyolen, Polycaprolactonpolyolen, Polycaprolactampolyolen oder Polyaminoamiden mit überschüssigen Polyisocyanaten bei Temperaturen von etwa 10 bis 100°C hergestellt, eventuell unter Zusatz von Katalysatoren wie Dibutylzinndilaurat oder tertiären Aminen. So werden z. B. zuerst hydroxylgruppenhaltige Polyester durch Verestern von mehrwertigen, vorzugsweise zweiwertigen und gegebenenfalls zusätzlich dreiwertigen Alkoholen mit mehrwertigen, vorzugsweise zweiwertigen aliphatischen, cycloaliphatischen, aromatischen und/oder heterocyclischen Carbonsäuren hergestellt. Ein entsprechender OH-gruppenhaltiger Polyester kann auch durch Reaktion von Polyglycidyläthern mit linearen oder verzweigten aliphatischen oder cyclischen, gesättigten oder ungesättigten $C_1-C_{18}$-Monocarbonsäuren oder mit linearen oder verzweigten aliphatischen oder cyclischen, gesättigten oder ungesättigten Monoaminen hergestellt werden. Die Auswahl der Polyalkohole und Carbonsäuren erfolgt unter dem Gesichtspunkt der möglichst hohen Verseifungsstabilität der Estergruppen. Es sind auch hydroxylgruppenhaltige Polymere verwendbar, die zusätzlich noch Urethan-, Harnstoff-, Biuret- oder Allophanatgruppen enthalten. Diese OH-gruppenhaltigen Grundharze werden danach in zweiter Reaktionsstufe mit Polyisocyanaten zu einem NCO-Präpolymeren umgewandelt. Diese Herstellung erfolgt bei etwa 25 bis 150°C, vorzugsweise 50 bis 100°C in Gegenwart von organischen Lösungsmitteln wie Methyläthylketon oder Essigsäureäthylester.

Die Ester- und Aminogruppen werden mit den Epoxid- oder Isocyanatgruppen enthaltenden

Grundharzen direkt umgesetzt. So geschieht die Einführung der Aminogruppe durch Reaktion mit aminogruppen- oder hydroxylgruppenhaltigen Ketiminen bzw. Aldiminen. Durch die Ketimin- bzw. Aldiminbildung werden die primären Aminogruppen so geschützt, daß sie über eine weitere funktionelle Gruppe ohne große Schwierigkeiten in das Grundharzmolekül eingeführt werden können. Die Schutzgruppe wird beim Lösen in Wasser leicht wieder abgespalten. Unter der Definition »primäre Aminogruppen« des Bindemittels werden also auch die durch Ketimin- oder Aldimingruppen geschützten Aminogruppen verstanden. Die Reaktionsbedingungen (Temperatur, Auswahl des Lösungsmittels, wasserfreies Arbeiten) sind so auszuwählen, daß keine hydrolytische Aufspaltung der C=N-Doppelbindung erfolgt. Die bevorzugte Reaktion von aminogruppenhaltigem Ketimin mit Epoxid- oder Isocyanatgruppen beginnt schon bei Raumtemperatur. Für eine vollständige Umsetzung ist es in der Regel notwendig, die Temperatur gegen Reaktionsende auf 50 bis 120°C zu erhöhen. Zur Herstellung von Produkten mit niedrigen Viskositäten ist es oft nützlich, die Ketimin-Lösung vorzulegen und das Grundharz langsam zuzugeben. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenstörungen beim elektrophoretischen Beschichten auftreten. Die Ketimine bzw. Aldimine werden nach bekannten Verfahren durch Wasserabspaltung aus den entsprechenden Polyaminen der allgemeinen Struktur $R-NH-R-NH_2$ oder den entsprechenden Aminoalkoholen der allgemeinen Struktur $HO-R-NH_2$ und geeigneten linearen oder verzweigten aliphatischen oder cyclischen Ketonen bzw. Aldehyden erhalten. Als Amine werden bevorzugt verwendet Diäthylentriamin, N-Methyl-äthylendiamin, N-Methyl-propylendiamin, N-Aminoäthylpiperazin, als Aminoalkohole 2-Aminoäthanol. Für die Maskierung der Aminogruppe werden bevorzugt Diäthylketon, Methylisobutylketon, Äthyl-n-propylketon oder auch Cyclopentanon, Cyclohexanon, Acetophenon oder Isobutyraldehyd verwendet. Ganz besonders geeignet sind solche Ketone, die das Auskreisen des Reaktionswassers ermöglichen und deren Substituenten eine möglichst kleine sterische Hinderung bewirken. Die Vollständigkeit der Ketiminbildung wird durch überschüssiges Keton erzielt.

Die Einführung der Carbonsäureestergruppen in das epoxid- oder isocyanathaltige Grundharz geschieht durch Reaktion von Hydroxi- und/oder Aminoalkylcarbonsäureestern und/oder sauren Polycarbonsäureestern an Harzmoleküle mit Isocyanat- und Epoxidgruppen. Sie sollen im neutralen wäßrigen Medium des abgeschiedenen Films bei Temperaturen über etwa 140°C, besonders über 160°C, mit den primären oder sekundären Aminogruppen reagieren. Die Carboxylgruppe kann verestert sein mit kurz- und/oder langkettigen linearen und/oder verzweigten und/oder cyclischen $C_1-C_{18}$-, bevorzugt $C_1-C_6$-Monoalkoholen. Die Flüchtigkeit des abgespaltenen Alkohols sollte so groß sein, daß er bei den anzuwendenden Einbrenntemperaturen in dünnen Schichten aus dem Film entfernt wird. Es sollen im wesentlichen alle endständigen Carboxylgruppen mit Alkoholen verestert werden, die einen Siedepunkt unter 280°C, bevorzugt unter 180°C, besonders bevorzugt unter 140°C, haben. Um einen guten Verlauf zu erzielen, ist es notwendig, einen Anteil an thermisch abspaltbaren Hochsiedern im Film zu haben. Andererseits wird die Reaktionsfähigkeit der Ester durch den Einsatz niedrigsiedender primärer Alkohole wie Methanol oder Äthanol und durch die Erhöhung der elektrophilen Aktivität der Carboxylgruppe durch geeignete Substituenten gesteigert. Die Anzahl der umamidierbaren Estergruppen entspricht bevorzugt einer Esterzahl von mindestens etwa 40, besonders mindestens etwa 60 und höchstens etwa 150, besonders höchstens etwa 120. Die Esterzahl bezeichnet die Menge in mg KOH, die der Menge Alkohol äquivalent ist, welche in 1 g Festsubstanz enthalten ist und beim thermischen Vernetzen durch Umamidierung abgespalten werden kann.

Eine direkte Umsetzung kann durch Reaktion der Aminoalkylcarbonsäureester, die eine reaktive sekundäre oder primäre Aminogruppe enthalten, mit Epoxidgrundharzen geschehen, wobei gleichzeitig eine basische funktionelle Gruppe eingeführt wird. Bei Verwendung eines Isocyanatharzes wird diese Aminogruppe dagegen in eine neutrale Harnstoffgruppierung umgewandelt, was bevorzugt wird. Eine besonders bevorzugte einfache direkte Umsetzung ist zwischen Hydroxicarbonsäurealkylester und Polyisocyanaten möglich. Besonders gut hat sich der Einbau von Methyl- und/oder Äthyl- und/oder Propylester der Milchsäure bzw. der Dimethylolpropionsäure bewährt.

Für die Einführung von Carbonsäurealkylester eignen sich auch saure Polycarbonsäurealkylester. So können z. B. Dicarbonsäuremonoalkylester mit epoxidgruppenhaltigen Harzen umgesetzt werden, die mindestens zwei, bevorzugt mehr als zwei Epoxidgruppen im Molekül enthalten sollen. Die Monoester werden aus gesättigten oder ungesättigten Dicarbonsäureanhydriden, wie Maleinsäureanhydrid, Bernsteinsäureanhydrid oder Tetrahydrophthalsäureanhydrid und $C_1$ bis $C_6$ linearen oder verzweigten gesättigten oder ungesättigten Monoalkoholen, bevorzugt Methanol und/oder Äthanol, hergestellt. Ein geringer Überschuß des verwendeten Alkohols erhöht die Stabilität des Monoesters. Sowohl bei der Herstellung als auch bei der Zugabe zum Epoxidharz sollte die Reaktionstemperatur nach Möglichkeit unter 120°C, bevorzugt unter 100°C, gehalten werden, um Umesterungen zu vermeiden. Setzt man Tri- bis Hexacarbonsäureanhydride, wie Trimellithsäureanhydrid, Pyromellithsäuredianhydrid, mit Hydroxialkylcarbonsäureestern um, so werden entweder alle Carboxylgruppen verestert oder durch Umsetzung mit Monoepoxidverbindungen die Zahl der funktionellen Carboxylgruppen auf etwa eine pro Molekül reduziert. Der Einbau in das Grundharz erfolgt dann entweder durch Umamidierung oder Umsetzung mit NH- bzw. OH-Gruppen oder durch Additionsreaktion an Isocyanat- oder

besonders Epoxidgruppen. Carbonsäurealkylestergruppenhaltige Polyester können auch durch Reaktionen von sauren Polycarbonsäureestern mit Monoepoxidverbindungen oder gegebenenfalls Polyalkoholen erhalten werden, wobei bis auf Säurezahl unter 10, bevorzugt Säurezahl unter 5, einkondensiert wird. Die Reaktionen erfolgen bei Reaktionstemperaturen von etwa 140 bis 240°C, bevorzugt von 160 bis 210°C. Sie erfolgen am besten stufenweise, wobei die Menge an Hydroxiäthylcarbonsäureester etwa 1,0 bis 1,3 Mol, bezogen auf die Anhydridgruppe, beträgt. Polycarbonsäureanhydride sind z. B. Trimellithsäureanhydrid, Pyromellithsäureanhydrid oder entsprechend hydrierte Ringsysteme sowie Cyclopentantetracarbonsäureanhydrid, Pyrazintetracarbonsäureanhydrid oder auch Butantetracarbonsäureanhydrid. Als Monoepoxidverbindungen werden Monoalkylglycidyläther, wie z. B. Butylglycidyläther oder Monoglycidylester, wie der Glycidylester der Versaticsäure, angesehen. Durch Defunktionalisieren von Polyglycidyläthern auf Basis Bisphenol A oder von epoxidierten Olefinen, wie z. B. 1-Epoxiäthyl-3.4-epoxicyclohexan oder Dicyclopentenyl-diepoxid mit Monoaminen, Alkoholen oder organischen Säuren können auch entsprechende monofunktionelle Komponenten hergestellt werden.

Die Einführung der Ester- und Aminogruppen kann jedoch auch indirekt über die Herstellung eines Epoxid- oder Isocyanatgruppen enthaltenden Zwischenproduktes erfolgen. Hierbei werden z. B. geeignete isocyanatgruppenhaltige Harze durch Reaktion mit aminogruppenhaltigen Ketiminen oder Hydroxi- bzw. Aminoalkylcarbonsäureester so weit defunktionalisiert, daß nur eine Isocyanatgruppe pro Molekül übrigbleibt. Über diese Isocyanatgruppe kann dann das Zwischenprodukt in das Hydroxylgruppen enthaltende Grundharz eingeführt werden, wobei das Zwischenprodukt entweder beide einzuführende funktionelle Gruppen enthalten oder ein Gemisch aus zwei Zwischenprodukten mit unterschiedlichen funktionellen Gruppen sein kann. Es ist jedoch auch möglich, schrittweise vorzugehen und die eine funktionelle Gruppe erst in das Grundharz und dann die andere funktionelle Gruppe über das Zwischenprodukt einzuführen. Stellt man ein OH-gruppenhaltiges Harz aus Polyglycidyläther und sauren Polycarbonsäureestern her, dann wird die Aminogruppe über ein entsprechendes Monoisocyanat eingeführt. Reagiert das Epoxidharz umgekehrt erst mit dem aminogruppenhaltigen Ketimin, so muß das entstehende OH-gruppenhaltige Harz mit einem isocyanatgruppenhaltigen Urethanester umgesetzt werden, der z. B. aus 1 Mol Hexamethylendiisocyanat und 1 Mol Milchsäureäthylester hergestellt wird.

Verwendet man dagegen zur Molekülvergrößerung einen hydroxylgruppenhaltigen Polyester aus Dicarbonsäure(anhydriden) und Polyalkoholen mit einer Säurezahl unter 10, besonders unter 5, so müssen sowohl die primäre Aminogruppe wie auch die Carbonsäureestergruppe über ein Isocyanatgruppen enthaltendes Zwischenprodukt eingeführt werden.

Die gleichen Überlegungen gelten, wenn das epoxidgruppenhaltige Zwischenprodukt aus einem mindestens zwei Epoxidgruppen enthaltenden Harz hergestellt wurde, z. B. aus einem Polyglycidyläther auf Basis Bisphenol A mit einem Epoxiäquivalent von 180 und einem aminogruppenhaltigen Ketimin.

Ein Sonderfall ist die Verwendung von estergruppenhaltigen Diisocyanaten wie 2,6-Diisocyanatomethylcapronat (Lysin-diisocyanatmethylester).

Zum Abstimmen der mechanischen und elektrischen Eigenschaften ist es möglich, mehrere selbstvernetzende Harztypen zu mischen oder mit einzukondensieren, wenn die Verträglichkeit gegeben ist. Es können jedoch auch andere aminogruppenhaltige Harze, wie Polyaminoamidharze zugemischt werden. In die kathodisch abscheidbaren Bindemittel ist es auch im geringen Umfang noch möglich, weitere modifizierende Harze einzuemulgieren oder mit einzukondensieren. Als solche können dienen Maleinatharze, Styrol-Allylalkohol-Copolymere, OH-gruppenhaltige Acrylcopolymere, OH-gruppenhaltige Epikoteester, blockierte Isocyanate, Amin- und Phenol-Formaldehyd-Harze sowie Vernetzungsmittel mit einem mittleren Molekulargewicht ($\overline{Mn}$) von 500 bis 5000, die endständige Carboxylgruppen enthalten, von denen ein solcher Anteil mit Monoalkoholen, enthaltend 1 bis 6 C-Atome, verestert sind, daß sie während der Abscheidung nicht zur Anode wandern und eine Esterzahl von 30 bis 350, vorzugsweise von 100 bis 250 aufweisen, wobei die Estergruppen in neutralem wäßrigen Medium weitgehend stabil sind, jedoch im basischen Medium bei Temperaturen über etwa 160°C gegenüber sekundären und/oder primären Aminogruppen des Kunstharz-Bindemittels reaktionsfähig sind, wie sie als Vernetzungskomponente B in EP-A-4 090 beschrieben sind. Um Fällungserscheinungen zu vermeiden, sollten nicht über 20 Gew.-%, besser unter 10 Gew.-%, einemulgiert werden und zur Verbesserung der Emulgierbarkeit entweder eine höhere OH-Zahl von etwa 100 bis 250 oder ein geringer Anteil an basischen Aminogruppen (Aminzahl unter etwa 60, besser unter 40) vorhanden sein.

Die Wasserlöslichkeit wird durch Salzbildung der aminogruppenhaltigen Harze mit sauren Verbindungen erzielt. Hierzu eignen sich beispielsweise Salzsäure, Essigsäure, Phosphorsäure, Milchsäure, Malonsäure, Zitronensäure, Ameisensäure, Acrylsäure usw. Mit Wasser verdünnbare, als Bindemittel dienende kationische Harze können hergestellt werden, indem man dem basischen Harz etwa 0,2 bis 1,0 Val, vorzugsweise 0,3 bis 0,8 Val der protonisierenden Säure, bezogen auf das basische Stickstoffatom im Harz, zusetzt und das Gemisch bei Temperaturen von etwa 20 bis 90°C gut rührt. Von der Herstellung der Harze eingeschleppte störende Lösungsmittel werden im Vakuum abdestilliert, am besten nach der hydrolytischen Zersetzung des Ketimins. Das Überzugsmittel kann zur Senkung der

Viskosität, zur Steuerung der Abscheidespannung und zur Verbesserung des Verlaufs bis zu ungefähr 20 Gew.-% organische Lösungsmittel enthalten. Es können hierbei wasserlösliche Lösungsmittel wie Alkohole, Glykoläther, Ketoalkohole oder geringe Anteile nicht wasserlöslicher Lösungsmittel wie Kohlenwasserstoffe verschiedener Kettenlänge verwendet werden. Es wird ein möglichst niedriger Gehalt an organischen Lösungsmitteln angestrebt.

Der Feststoffgehalt des Lackes, in dem das Überzugsmittel gemäß der Erfindung in verdünnter Form enthalten ist, richtet sich nach der jeweiligen Auftragsmethode. Zum Tauchen ohne Anlegen einer elektrischen Spannung oder zum Spritzen sind Feststoffgehalte von etwa 30 bis 60 Gew.-% zweckmäßig. Zur kathodischen Abscheidung aus einem Lackbad auf elektrisch leitende Oberflächen beträgt er nach dem Verdünnen mit Wasser zweckmäßig 5 bis 30 Gew.-%, vorzugsweise 10 bis 20 Gew.-%. Der pH-Wert des Lackes liegt im allgemeinen zwischen etwa 5,0 und 7,5, vorzugsweise zwischen 6,0 und 7,0. Die elektrophoretische Abscheidung erfolgt zweckmäßig frühestens 24 Stunden nach Herstellung des Bades. Während dieser Zeit wird zweckmäßig kontinuierlich gerührt, um eine gleichmäßige Verteilung zu erreichen. Als Anode werden elektrisch leitfähige, nicht korrodierende Elektroden, z. B. aus nichtrostendem Stahl oder Graphit, verwendet. Der kathodisch zu beschichtende Gegenstand und die Anode werden, wie für die elektrophoretische Abscheidung bekannt, in ein wäßriges Bad getaucht. Während der Abscheidung wird das Bad bei zweckmäßigen Temperaturen von etwa 20 bis 35° C gehalten. Festkörper, Abscheidetemperatur und -zeit sowie Spannung werden so gewählt, daß die gewünschte Schichtstärke nach Abspülen und Einbrennen erhalten wird.

Die Härtung erfolgt durch 15 Minuten bis 1 Stunde langes Einbrennen bei etwa 140 bis 210° C, bevorzugt 160 bis 180° C. Durch Einarbeiten von z. B. 0,05 bis 3 Gew.-% Umesterungskatalysatoren kann die Einbrenntemperatur erniedrigt oder die Vollständigkeit der Umsetzung beschleunigt werden. Als typische Katalysatoren können eingesetzt werden Ammoniumverbindungen wie Benzyltrimethylammoniumhydroxid, organische Zinnverbindungen wie Dibutylzinndilaurat, Titankomplexe wie Butyltitanat oder Triäthanolamintitanat, Eisen-III-acetylacetonat, Chrom-III-acetylacetonat, Zinkacetat, Bleioctoat, Cer-III-acetat, Antimontrioxid oder Kobaltnaphthenat.

Das konzentrierte, mit Wasser zu verdünnende Überzugsmittel gemäß der Erfindung mit z. B. einem Festkörper von etwa 85 bis 50 Gew.-% kann in üblicher Weise mit Kugelmühle, Dreiwalze oder Sandmühle pigmentiert werden. Zur Pigmentierung können übliche Pigmente, Füllstoffe, Korrosionsschutz-Inhibitoren und Lackhilfsmittel wie Antischaummittel verwendet werden, solange sie mit Wasser im sauren bis neutralen pH-Wert keine störenden Reaktionen eingehen, keine wasserlöslichen Fremdionen einschleppen und beim Altern in nicht aufrührbarer Form ausfallen. Die Lacke sind besonders für die Elektrotauchlackierung von Metallen geeignet und geben nach Einbrennen von 30 Minuten 180° C glatte, glänzende, harte Filme mit guter Haftfestigkeit und Elastizität sowie besonders guter Korrosionsbeständigkeit. Das Pigment-Bindemittelverhältnis ist abhängig von der Viskosität des Bindemittels und liegt im allgemeinen zwischen 0,1 : 1 und 1,2 : 1.

## Beispiel 1

### a) Isocyanathaltiger Urethanester

In eine Lösung von 840 g Hexamethylen-1,6-diisocyanat in 159 g trockenem Methylisobutylketon werden bei etwa 40° C in drei Stunden ein Gemisch aus 590 g wasserfreiem Milchsäureäthylester und 0,2 g Dibutylzinndilaurat gegeben und anschließend bei 40° C gehalten, bis bei einem theoretischen Festkörper von 90 Gew.-% der NCO-Gehalt 13,2% beträgt.

### b) Selbstvernetzendes Harz

1498 g einer 75%igen Lösung eines Polyglycidyläthers auf Basis Bisphenol A mit einem Epoxiäquivalentgewicht von 458 werden zum Auskreisen von Wasser gemeinsam mit 62 g Versaticsäure® und 1,5 g Triphenylphosphin unter Inertgas und gutem Rühren auf etwa 155° C erhitzt und diese Temperatur gehalten, bis die Säurezahl kleiner als 0,1 ist. Danach wird auf etwa 70° C abgekühlt und 286 g eines Adduktes aus 1 Mol 1,6-Diaminohexan und 2 Mol eines Glycidylesters der Versaticsäure zugegeben, wobei die Temperatur auf etwa 80° C ansteigt. Nach zwei Stunden werden 327 g einer 61,2%igen Lösung von Diäthylentriaminmethylisobutyldiketimin in Methylisobutylketon zugegeben und zwei weitere Stunden bei 80° C gehalten. Anschließend werden 323 g einer 90%igen Lösung des oben beschriebenen, isocyanatgruppenhaltigen Urethanesters zugegeben und zwei Stunden bei 80° C umgesetzt. Nach Verdünnen mit 500 g Monobutylglykoläther werden bei 80° C unter vermindertem Druck 450 g Lösungsmittel abdestilliert.

| | |
|---|---|
| Festkörper: | 76,5 Gew.-% (40 Minuten langes Erwärmen auf 180°C im Umlufttrokkenschrank) |
| Viskosität: | 3,1 Pa s (nach Verdünnen auf 50 Gew.-% Festkörper mit Monobutylglykoläther) |
| Aminzahl: | 107 mg KOH/g Festharz |

c) Abscheidungsbad

In 235 g selbstvernetzendes Harz werden zur Elastifizierung 20 g Polyaminoamidharz, das eine Aminzahl von 90 und eine Viskosität von 0,86 Pa s als 50gew.-%ige Lösung in Monobutylglykoläther hat, gelöst, mit 5 g Essigsäure neutralisiert und allmählich mit 1,740 g entionisiertem Wasser auf einen Festkörper von etwa 10 Gew.-% verdünnt.

| | |
|---|---|
| pH-Wert: | 7,2 |
| Badleitfähigkeit: | 1050 $\mu Scm^{-1}$ |
| MEQ-Wert: | etwa 40 |

MEQ-Säure ist die Zahl der Milliäquivalente Amin pro 100 g Festkörper.

Beim Stehen des Bades treten keine Fällungserscheinungen oder Phasentrennungen auf. Die Filme werden zwei Minuten bei einer Badtemperatur von 30°C auf Bonder 127 abgeschieden, mit Wasser abgespült und 25 Minuten bei 180°C im Umluftofen eingebrannt.

| | |
|---|---|
| Abscheidespannung: | 160 Volt für 13 µm Trockenfilmstärke |
| Pendelhärte nach König (DIN 53 157): | 202 Sekunden |
| Biegeprobe: | i.O. (in Ordnung) |
| Spaltprodukte: | 6,4% |

Beispiel 2

a) Isocyanathaltiger Urethanester

In eine Lösung von 630 g Trimethylhexamethylendiisocyanat in 113 g trockenem Methylisobutylketon werden bei etwa 40°C in etwa 3 Stunden 390 g wasserfreier Milchsäureäthylester gegeben, wobei die Temperatur langsam auf 75°C ansteigt. Anschließend wird bei 70 bis 75°C gehalten, bis bei einem theoretischen Festkörper von 90 Gew.-% der NCO-Gehalt 11,3% beträgt.

b) Selbstvernetzendes Harz

1350 g einer 75%igen Lösung eines Polyglycidyläthers auf Basis Bisphenol A mit einem Epoxiäquivalentgewicht von 500 werden zum Auskreisen von Wasser gemeinsam mit 62 g Versaticsäure®, 240 g eines 90%ig in Methylisobutylketon gelösten Präkondensats aus 2 Mol Adipinsäure und 1 Mol Hydroxipivalinsäureneopentylglykolester und 1,5 g Triphenylphosphin unter Inertgas und gutem Rühren auf etwa 155°C erhitzt und diese Temperatur gehalten, bis die Säurezahl kleiner als 0,1 ist. Danach wird auf 80°C abgekühlt und 336 g einer 59,6%igen Lösung von Diäthylentriamin-methylisobutyl-diketimin in Methylisobutylketon zugegeben und 2 Stunden bei 80°C gehalten. Anschließend werden 182,9 g einer 90%igen Lösung des oben beschriebenen, isocyanatgruppenhaltigen Urethanesters zugegeben und 2 Stunden bei 80°C umgesetzt. Nach Verdünnen mit 500 g Monobutylglykoläther werden bei 80°C unter vermindertem Druck 530 g Lösungsmittel abdestilliert.

| | |
|---|---|
| Festkörper: | 78,6 Gew.-% |
| Viskosität: | 0,96 Pa s |
| Aminzahl: | 75,4 mg KOH/g |

c) Abscheidungsbad

305 g selbstvernetzendes Harz werden mit 6 g Essigsäure neutralisiert und allmählich mit 1689 g entionisiertem Wasser auf einen Festkörper von etwa 12 Gew.-% verdünnt.

pH-Wert: 7,65
Badleitfähigkeit: 1424 $\mu$Scm$^{-1}$
MEQ-Wert: etwa 40

Beim Stehen des Bades treten keine Fällungserscheinungen oder Phasentrennungen auf. Die Filme werden elektrophoretisch zwei Minuten bei einer Badtemperatur von 30°C auf Bonder-127-Blechen abgeschieden, mit Wasser abgespült und 25 Minuten bei 160°C im Umluftofen eingebrannt.

Abscheidespannung: 100 Volt für 21 $\mu$m Trockenfilmstärke
Oberfläche: glatt, gut verlaufend
König-Pendelhärte: 210 Sekunden
Salzsprühtest nach DIN 50 021

| | 240 h ungebondertes Blech | 360 h Bonder 127 |
|---|---|---|
| Unterrostung | 1,5–2 mm | 1,5–2,5 mm |
| Flächenrost | 2 | 0–1 |
| Blasen (m/g) | 2/2–3 | 1–2/1–2 |
| Kantenrost | 0 | 1/3 |

## Beispiel 3

### a) OH-gruppenhaltiges Präpolymeres

In 3890 g Hydroxipivalinsäure-neopentylglykolester werden bei etwa 100°C 2109 g Isophthalsäure eingestreut und anschließend bei langsam ansteigender Temperatur von 180 bis 250°C unter Abspaltung von Reaktionswasser bis auf eine Säurezahl unter 5 polykondensiert. Es wird mit trockenem Äthylacetat auf einen Festkörper von etwa 60 Gew.-% verdünnt.
Hydroxylzahl: 84 mg KOH/g Festharz.

### b) Isocyanatgruppenhaltiger Urethanester

1787 g des OH-gruppenhaltigen Präpolymeren werden mit 1170 g eines biuretgruppenhaltigen aliphatischen Triisocyanats auf Basis Hexamethylendiisocyanat, 236 g trockenem Milchsäureäthylester und 9 g wasserfreiem Äthylacetat gemischt und so lange bei einer Temperatur von 80°C unter Stickstoff gerührt, bis ein NCO-Gehalt von 3,4% gemessen wird.

### c) Selbstvernetzendes Harz

In eine Lösung von 451 g einer 75gew.-%igen Lösung von Methylaminopropylamin-methylisobutylketimin in Methylisobutylketon und 116 g wasserfreiem Äthylacetat werden 4105 g des isocyanatgruppenhaltigen Urethanesters in etwa 1,5 Stunden zugetropft, wobei die Reaktionstemperatur durch Kühlung unter 40°C gehalten wird. Anschließend auf 80°C erwärmen, diese Temperatur zwei Stunden halten und danach unter Zusatz von 72 g entionisiertem Wasser hydrolysieren und unter Vakuum das Lösungsmittel abdestillieren. Mit Monobutylglykoläther wird auf einen Festkörper von etwa 70 Gew.-% verdünnt.

Aminzahl: 45 mg KOH/g Festharz
Viskosität: 2 Pa s (nach Verdünnen auf 50 Gew.-% Festkörper mit Monobutylglykoläther bei 25°C)

### d) Abscheidungsbad 1

281 g selbstvernetzendes Harz werden mit 7,2 g Essigsäure neutralisiert und allmählich mit 1712 g entionisiertem Wasser auf einen Festkörper von etwa 10 Gew.-% verdünnt.

pH-Wert: 7,1
MEQ-Wert: etwa 60

Beim Stehen des Bades treten keine Fällungserscheinungen auf. Bei 75 Volt Abscheidespannung wird ein Film von 10 µm Schichtdicke erhalten.

e) Abscheidungsbad 2

In 239 g selbstvernetzendes Harz werden 43,5 g eines mit Aminogruppen reaktiven Harzes, dessen Herstellung nachfolgend beschrieben wird, als zusätzliches Vernetzungsmittel zugemischt, mit 7,2 g Essigsäure neutralisiert und allmählich mit 1710 g entionisiertem Wasser auf einen Festkörper von etwa 10 Gew.-% verdünnt.

pH-Wert: 6,6
MEQ-Wert: etwa 60

Beim Stehen des Bades treten keine Fällungserscheinungen auf. Die Filme werden zwei Minuten bei einer Badtemperatur von 25° C auf Bonder 125 abgeschieden, mit Wasser abgespült und 25 Minuten bei 160° C im Umluftofen eingebrannt.

| | |
|---|---|
| Abscheidespannung: | 150 Volt für 20 µm Trockenfilmstärke |
| Pendelhärte nach König (DIN 53 157): | 99 Sekunden |
| Erichsen-Tiefung (DIN 53 156): | größer als 10 mm |

Herstellung des Vernetzungsmittels

569,6 g eines biuretgruppenhaltigen aliphatischen Triisocyanats auf Basis Hexamethylendiisocyanat werden in 96 g wasserfreiem Äthylglykolacetat gelöst und auf 80° C erwärmt. In 25 Minuten werden 236 g wasserfreier Milchsäureäthylester zugetropft, danach 30 Minuten bei 80° C gehalten und dann in 10 Minuten 59 g Methyldiäthanolamin zugegeben. Nach zwei Stunden bei 80° C wird abgefüllt.

Festkörper: etwa 90 Gew.-%
Esterzahl (ber.) = 130 mg KOH/g Festharz
Aminzahl = 32 mg KOH/g Festharz

f) Abscheidungsbad

In 239 g selbstvernetzendem Harz werden 40 g einer 75%igen Lösung eines käuflichen verätherten Phenolharzes auf Basis Bisphenol A in Isopropanol zugemischt, mit 4,8 g Essigsäure neutralisiert und allmählich mit 1716 g entionisiertem Wasser auf einen Festkörper von etwa 10 Gew.-% verdünnt.

pH-Wert: 7,6
MEQ-Wert: etwa 40

Die Filme werden zwei Minuten bei einer Badtemperatur von 25° C auf Bonder-130-Blechen elektrophoretisch abgeschieden, mit Wasser abgespült und 25 Minuten bei 160° C im Umluftofen eingebrannt.

| | |
|---|---|
| Abscheidespannung: | 120 Volt für 20 µm Trockenfilmstärke |
| Pendelhärte nach König: | 160 Sekunden |
| Erichsen-Tiefung: | größer als 10 mm |

**Patentansprüche**

1. Selbstvernetzendes, hitzehärtbares, wäßriges Lacküberzugsmittel, enthaltend durch Protonisieren mit Säuren wasserverdünnbares Bindemittel, Pigmente, Füllstoffe, Korrosionsschutzinhibitoren, Lackhilfsmittel, gegebenenfalls Katalysatoren und in einer Menge von bis zu 20 Gew.-%, bezogen auf das Gesamtgewicht des Überzugsmittels, organische Lösungsmittel, dadurch gekennzeichnet, daß es als Bindemittel enthält ein primäre und/oder sekundäre und gegebenenfalls auch tertiäre

Aminogruppen sowie endständige veresterte Carboxylgruppen enthaltendes Kunstharz mit einem mittleren Molekulargewicht $(\overline{Mn})$ von etwa 500 bis 15 000, das eine Aminzahl von etwa 20 bis 180 und eine Esterzahl von 20 bis 350 aufweist, wobei die Estergruppen in neutralem wäßrigem Medium weitgehend stabil sind, jedoch in basischem Medium bei Temperaturen über etwa 140°C gegenüber primären und/oder sekundären Aminogruppen des Kunstharzes reaktionsfähig sind.

2. Überzugsmittel nach Anspruch 1, dadurch gekennzeichnet, daß die Estergruppen bei Temperaturen über etwa 160°C gegenüber den primären und/oder sekundären Aminogruppen des Kunstharz-Bindemittels reaktionsfähig sind.

3. Überzugsmittel nach Anspruch 1 oder 2, dadurch gekennzeichnet, daß das Äquivalenzverhältnis zwischen primären und/oder sekundären Aminogruppen und veresterten Carboxylgruppen im Bereich von 1 : 5 bis 1 : 0,1, vorzugsweise 1 : 1,3 bis 1 : 0,5, besonders bevorzugt von etwa 1 : 1, liegt.

4. Überzugsmittel nach einem oder mehreren der Ansprüche 1 bis 3, dadurch gekennzeichnet, daß das mittlere Molekulargewicht $(\overline{Mn})$ des Kunstharz-Bindemittels 800 bis 10 000, vorzugsweise 1000 bis 5000, beträgt.

5. Überzugsmittel nach einem oder mehreren der Ansprüche 1 bis 4, dadurch gekennzeichnet, daß die Aminzahl des Kunstharz-Bindemittels 30 bis 150, vorzugsweise 50 bis 120, beträgt.

6. Überzugsmittel nach einem oder mehreren der Ansprüche 1 bis 5, dadurch gekennzeichnet, daß die Esterzahl des Kunstharz-Bindemittels 40 bis 150, vorzugsweise 60 bis 120, beträgt.

7. Überzugsmittel nach einem oder mehreren der Ansprüche 1 bis 6, dadurch gekennzeichnet, daß das Bindemittel ein Reaktionsprodukt von epoxidgruppenhaltigen und/oder isocyanatgruppenhaltigen Verbindungen mit hydroxy- oder aminogruppenhaltigen Aldiminen oder Ketiminen und mit Hydroxy- und/oder Aminoalkylestern oder sauren Polycarbonsäureestern und gegebenenfalls Polyestern ist.

8. Überzugsmittel nach einem oder mehreren der Ansprüche 1 bis 7, dadurch gekennzeichnet, daß mindestens 80, vorzugsweise mindestens 90, insbesondere mindestens 95 Äquivalenten-% der endständigen Carboxylgruppen verestert sind.

9. Überzugsmittel nach einem oder mehreren der Ansprüche 1 bis 8, dadurch gekennzeichnet, daß im wesentlichen alle endständigen Carboxylgruppen verestert sind.

10. Überzugsmittel nach einem oder mehreren der Ansprüche 1 bis 9, dadurch gekennzeichnet, daß die endständigen Carboxylgruppen mit Alkoholen mit einem Siedepunkt unter 140°C verestert sind.

11. Überzugsmittel nach einem oder mehreren der Ansprüche 1 bis 10, dadurch gekennzeichnet, daß die endständigen Carboxylgruppen mit primären Alkoholen verestert sind.

12. Überzugsmittel nach einem oder mehreren der Ansprüche 1 bis 11, dadurch gekennzeichnet, daß die endständigen Carboxylgruppen mit niederen aliphatischen Alkoholen, vorzugsweise Methanol und/oder Äthanol, verestert sind.

13. Verwendung des Überzugsmittels nach Anspruch 1 zur kathodischen Abscheidung aus einem Lackbad auf elektrisch leitenden Oberflächen.

**Claims**

1. A self-cross-linking, heat-hardenable aqueous lacquer coating agent containing a binder which is water-dilutable by protonization with acids, and containing pigments, fillers, anticorrosion inhibitors, lacquer auxiliaries, optionally catalysts and in a quantity of up to 20% by weight, based on the total weight of the coating agent, organic solvents, characterised in that it contains as a binder, a synthetic resin containing primary and/or secondary and optionally also tertiary amino groups and terminal esterified carboxyl groups, having an average molecular weight $(\overline{Mn})$ ob from about 500 to 15 000 which has an amine number of from about 20 to 180 and an ester number of from 20 to 350, the ester groups being substantially stable in a neutral aqueous medium, but being reactive to primary and/or secondary amino groups of the synthetic resin in a basic medium at a temperature above about 140°C.

2. A coating agent according to claim 1, characterised in that the ester groups are reactive to the primary and/or secondary amino groups of the synthetic resin binder at a temperature above about 160°C.

3. A coating agent according to claim 1 or 2, characterised in that the equivalence ratio between primary and/or secondary amino groups and esterified carboxyl groups ranges from 1 : 5 to 1 : 0.1, preferably from 1 : 1.3 to 1 : 0.5, and more preferably about 1 : 1.

4. A coating agent according to one or more of claims 1 to 3, characterised in that the average molecular weight $(\overline{Mn})$ of the synthetic resin binder is from 800 to 10 000, preferably from 1000 to 5000.

5. A coating agent according to one or more of claims 1 to 4, characterised in that the amine number of the synthetic resin binder is from 30 to 150, preferably from 50 to 120.

6. A coating agent according to one or more of claims 1 to 5, characterised in that the ester number of the synthetic resin binder is from 40 to 150, preferably from 60 to 120.

7. A coating agent according to one or more of claims 1 to 6, characterised in that the binder is a reaction product of compounds containing epoxide groups and/or isocyanate groups, with aldimines or ketimines containing hydroxy or amino groups, and with hydroxy and/or amino alkyl esters or acid

polycarboxylic acid esters and optionally polyesters.

8. A coating agent according to one or more of claims 1 to 7, characterised in that at least 80, preferably at least 90, and in particular at least 95 equivalent percent of the terminal carboxyl groups are esterified.

9. A coating agent according to one or more of claims 1 to 8, characterised in that substantially all the terminal carboxyl groups are esterified.

10. A coating agent according to one or more of claims 1 to 9, characterised in that the terminal carboxyl groups are esterified with alcohols having a boiling point of below 140° C.

11. A coating agent according to one or more of claims 1 to 10, characterised in that the terminal carboxyl groups are esterified with primary alcohols.

12. A coating agent according to one or more of claims 1 to 11, characterised in that the terminal carboxyl groups are esterified with lower aliphatic alcohols, preferably methanol and/or ethanol.

13. The use of the coating agent according to claim 1 for cathodic deposition from a lacquer bath on electrically conducting surfaces.

**Revendications**

1. Agent de revêtement de laque, aqueux, durcissable thermiquement, à auto-réticulation, comportant des liants pouvant être dilués par l'eau par protonisation avec des acides, des pigments, des charges, des inhibiteurs de corrosion pour la protection, des agents aidant la laque, éventuellement des catalyseurs, et, en quantité allant jusqu'à 20% en poids, par rapport au poids total de l'agent de revêtement, des solvants organiques, caractérisé en ce qu'il comporte, comme liant, une résine synthétique comportant des groupes amino primaires et/ou secondaires et éventuellement aussi tertiaires, ainsi que des groupes carboxyles estérifiés placés à l'extrémité, à poids moléculaire moyen ($\overline{Mn}$) d'environ 500 à 15 000 qui présente un indice d'amine d'environ 20 à 180 et un indice d'ester de 20 à 350, et, de ce fait, les groupes esters sont extrêmement stables en milieu aqueux neutre, et, cependant, en milieu basique, à des températures supérieures à environ 140° C, ils sont aptes à la réaction vis-à-vis des groupes amino primaires et/ou secondaires de la résine synthétique.

2. Agent de revêtement selon la revendication 1, caractérisé en ce que les groupes esters sont aptes à la réaction, à des températures supérieures à environ 160° C, vis-à-vis des groupes amino primaires et/ou secondaires du liant en résine synthétique.

3. Milieu de revêtement selon la revendication 1 ou la revendication 2, caractérisé en ce que le rapport en équivalent entre les groupes amino primaires et/ou secondaires et les groupes carboxyles estérifiés se trouve dans la gamme de 1 : 5 à 1 : 0,1, de préférence 1 : 1,3 à 1 : 0,5, particulièrement de préférence environ 1 : 1.

4. Agent de revêtement selon l'une quelconque des revendications 1 à 3, caractérisé en ce que le poids moléculaire moyen ($\overline{Mn}$) du liant en résine synthétique est 800 à 10 000, de préférence 1000 à 5000.

5. Agent de revêtement selon l'une quelconque des revendications 1 à 4, caractérisé en ce que l'indice d'amine du liant en résine synthétique est 30 à 150, de préférence 50 à 120.

6. Agent de revêtement selon l'une quelconque des revendications 1 à 5, caractérisé en ce que l'indice d'ester du liant en résine synthétique est 40 à 150, de préférence 60 à 120.

7. Agent de revêtement selon l'une quelconque des revendications 1 à 6, caractérisé en ce que le liant est un produit réactionnel de composés comportant des groupes isocyanates et/ou comportant des groupes époxydes, avec des aldimines ou des cétimines comportant des groupes amino ou hydroxy et avec des esters hydroxy et/ou aminoalkyliques ou des esters acides d'acides polycarboxyliques et éventuellement des polyesters.

8. Agent de revêtement selon l'une quelconque des revendications 1 à 7, caractérisé en ce qu'au moins 80, de préférence au moins 90, en particulier au moins 95, % en équivalent des groupes carboxyles placés à l'extrémité sont estérifiés.

9. Agent de revêtement selon l'une quelconque des revendications 1 à 8, caractérisé en ce qu'essentiellement tous les groupes carboxyles placés aux extrémités sont estérifiés.

10. Agent de revêtement selon l'une quelconque des revendications 1 à 9, caractérisé en ce que les groupes carboxyles placés à l'extrémité sont estérifiés avec des alcools à point d'ébullition en-dessous de 140° C.

11. Agent de revêtement selon l'une quelconque des revendications 1 à 10, caractérisé en ce que les groupes carboxyles se trouvant à l'extrémité sont estérifiés avec des alcools primaires.

12. Agent de revêtement selon l'une quelconque des revendications 1 à 11, caractérisé en ce que les groupes carboxyles placés à l'extrémité sont estérifiés avec des alcools aliphatiques inférieurs, de préférence le méthanol et/ou l'éthanol.

13. Utilisation de l'agent de revêtement selon la revendication 1 pour le dépôt cathodique à partir d'un bain de laque sur des surfaces électriquement conductrices.